# EUROPEAN PATENT SPECIFICATION

(11) **EP 0 859 145 B1**
(45) Date of publication and mention of the grant of the patent: **30.05.2001**
(21) Application number: 98101079.6
(22) Date of filing: 22.01.1998
(51) Int. Cl.: F02M 35/02, F02M 35/00, F02M 35/04, F02M 27/00, B01D 46/00

(54) **Air cleaner for internal combustion engine**
Luftreiniger für Verbrennungskraftmaschine
Epurateur d'air pour moteur à combustion interne

(30) Priority: 23.01.1997 JP 1010297
(43) Date of publication of application: 19.08.1998
(73) Proprietor: DENSO CORPORATION, Kariya-City Aichi-Pref. 448 (JP)
(72) Inventor: Kitahara, Noboru, Kariya-city, Aichi-pref. 448 (JP); Konishi, Masaaki, Kariya-city, Aichi-pref. 448 (JP)
(74) Representative: Pellmann, Hans-Bernd, Dipl.-Ing.

(56) References cited:
- US-A- 4 388 091
- US-A- 4 459 141
- US-A- 4 790 864
- PATENT ABSTRACTS OF JAPAN vol. 006, no. 192 (P-145), 30 September 1982 & JP 57 103016 A (HITACHI LTD), 26 June 1982,
- DATABASE WPI Section PQ, Week 8803 Derwent Publications Ltd., London, GB; Class Q53, AN 88-019558 XP002900030 & SU 1 314 138 A (KREMENCHUG CAR WKS)

## Description

### CROSS-REFERENCE TO RELATED APPLICATION

This application is based upon and claims benefit of priority of Japanese Patent Application No. Hei-9-10102 filed on January 23, 1997.

### BACKGROUND OF THE INVENTION

### 1. Field of the Invention

The present invention relates to an air cleaner for an internal combustion engine, and more particularly to its structure in which air flow is improved to be suitable to obtain more accurate air flow meter outputs.

### 2. Description of Related Art

As an air flow meter for an internal combustion engine, an air flow meter using a heated body such as a heat-wire has been in wide use. The heat-wire air flow meter has advantages that it measures directly an amount of air taken into an internal combustion engine and that it is able to measure a total amount of air by using a relatively small heat-wire. However, the output of the heat-wire air flow meter tends to be affected by turbulence of the air flow to be measured.

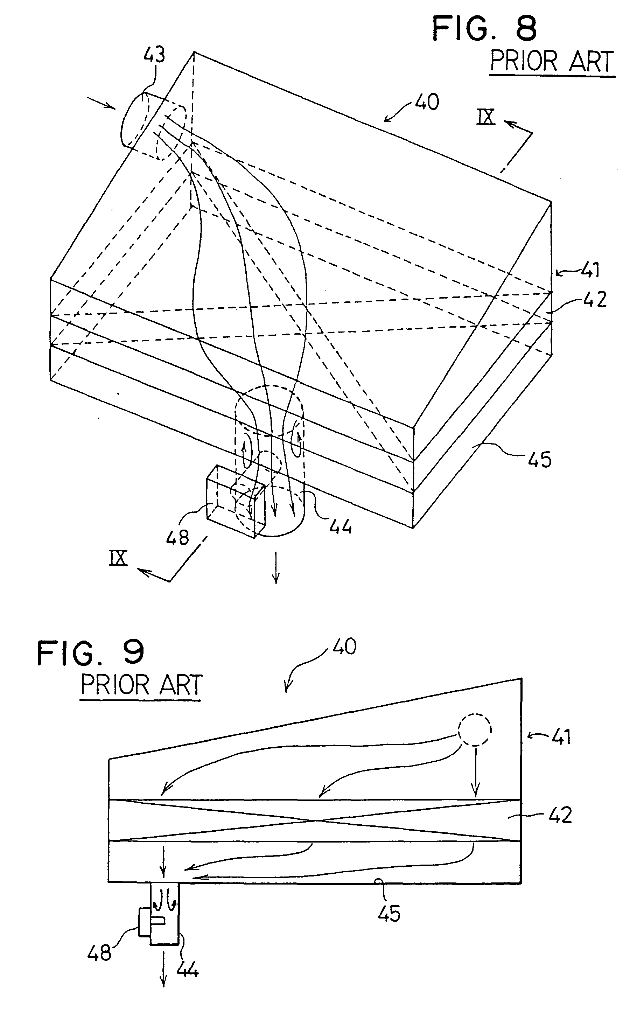

An example of a conventional air cleaner to which a heat-wire air flow meter is attached is shown in FIGS. 8 and 9. Air cleaner 40 includes air cleaner case 41 in which flat air cleaner element 42 is disposed, inlet pipe 43, and outlet pipe 44 to which heat-wire air flow meter 48 is attached. Outside air is sucked into air cleaner 40 from inlet pipe 43, filtered and cleaned through air cleaner element 42, and cleaned air is supplied to an internal combustion engine through outlet pipe 44. Outlet pipe 44 is located at a position eccentric from the center of bottom surface 45 of air cleaner case 41. The air entering into outlet pipe 44 where air flow meter 48 is attached often includes some turbulence which is caused by burble and/or vortex in the air flow. The turbulence in the air flow adversely affects accuracy of air volume measurement by heat-wire air flow meter 48. That is, output fluctuation of air flow meter is increased by the turbulence in the air flow.

In order to reduce the turbulence in the air flow, an air cleaner device disclosed in JP-A-57-103016 has a first stepped portion at its bottom plate, at its connection to its outlet pipe a grid for straightening the air flow at the upstream of an air flow meter. However, this grid creates additional resistance against the air flow, resulting in decrease in an engine output. Especially, when a higher effect of air flow straightening is intended, a grid creating a higher resistance against air flow has to be used. Also, the grid requires some additional cost.

### SUMMARY OF THE INVENTION

The present invention has been made in view of the above-mentioned problems, and an object of the present invention is to provide an improved air cleaner in which air flow turbulence is decreased for suppressing output fluctuation of a heat-wire air flow meter attached to the air cleaner.

The air cleaner is composed of a air cleaner case in which a flat air cleaner element is disposed, an inlet pipe connected to an upper side of the air cleaner case, and an outlet pipe connected to a bottom plate of the air cleaner case. Outside air is introduced into the air cleaner case, filtered and cleaned through the flat air cleaner element, and flows out through the outlet pipe. The air flow entering into the outlet pipe from the air cleaner case is converged by a first step formed at a junction of the bottom plate and the outlet pipe, and the air flow in the outlet pipe is further converged by a second step formed in the outlet pipe. Preferably, the output pipe is formed with a large pipe and a small pipe, both pipes being connected coaxially, and the second step is formed at a junction of the large pipe and the small pipe. The air flow entering into the output pipe from the air cleaner case is straightened by the first step. Turbulence of the air flow is alleviated in a space formed between the first and second steps, and further straightened by the second step in the outlet pipe. A heat-wire air flow meter is mounted on the outlet pipe at a downstream of the second step, so that a sensor of the air flow meter is exposed to the smooth air flow having less turbulence. Thus, outputs of the air flow meter become stable, and the output fluctuation can be made smaller.

The turbulence in the air flow is effectively alleviated by the simple structure without using an additional member for straightening the air flow. Accordingly, amount of air is measured precisely with less fluctuation.

A plurality of ribs for further straightening the air flow entering into the output pipe from the air cleaner case may be used. The ribs are disposed in the air cleaner case on the bottom plate thereof and arranged to extend radially from the first step. A member for straightening the air flow in the outlet pipe may be added to the structure of the present invention. Addition of the ribs and/or the straightening member further improves the air flow and decrease the turbulence.

Other objects and features of the present invention will become more readily apparent from a better understanding of the preferred embodiment described below with reference to the following drawings.

### BRIEF DESCRIPTION OF THE DRAWINGS

FIG. 1 is a perspective view showing an air cleaner as a first embodiment according to the present invention;
FIG. 2 is a cross-sectional view taken along a line II-II in FIG. 1;
FIG. 3 is a graph showing test results of fluctuation of air flow meter outputs in a conventional air cleaner and embodiments of the present invention;
FIG. 4 is a perspective view showing an air cleaner as a second embodiment according to the present invention;
FIG. 5 is a perspective view showing a rib used in the second embodiment shown in FIG. 4;
FIG. 6 is a perspective view showing an air cleaner as a third embodiment according to the present invention;
FIG. 7 is a perspective view showing a honeycomb member for straightening air flow used in the third embodiment shown in FIG. 6;
FIG. 8 is a perspective view showing a conventional air cleaner; and
FIG. 9 is a cross-sectional view taken along a line IX-IX in FIG. 8.

### DETAILED DESCRIPTION OF THE PREFERRED EMBODIMENTS

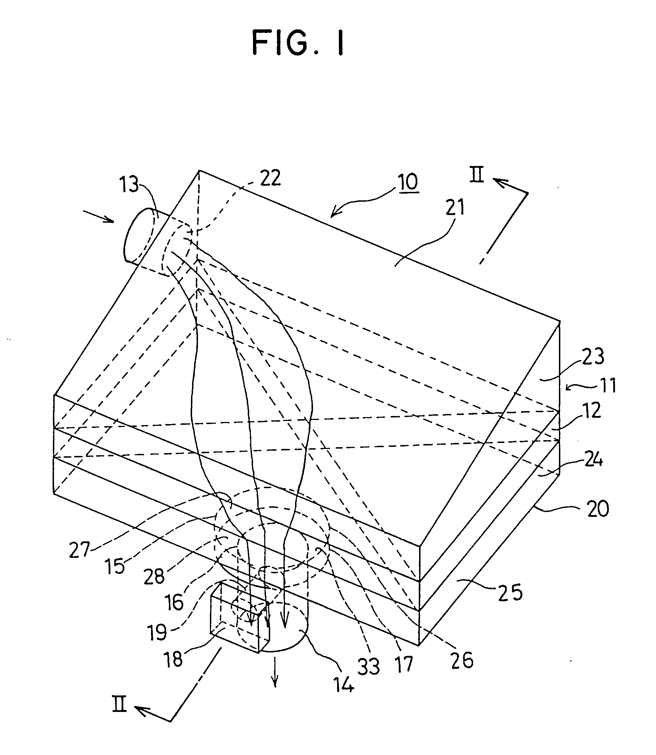

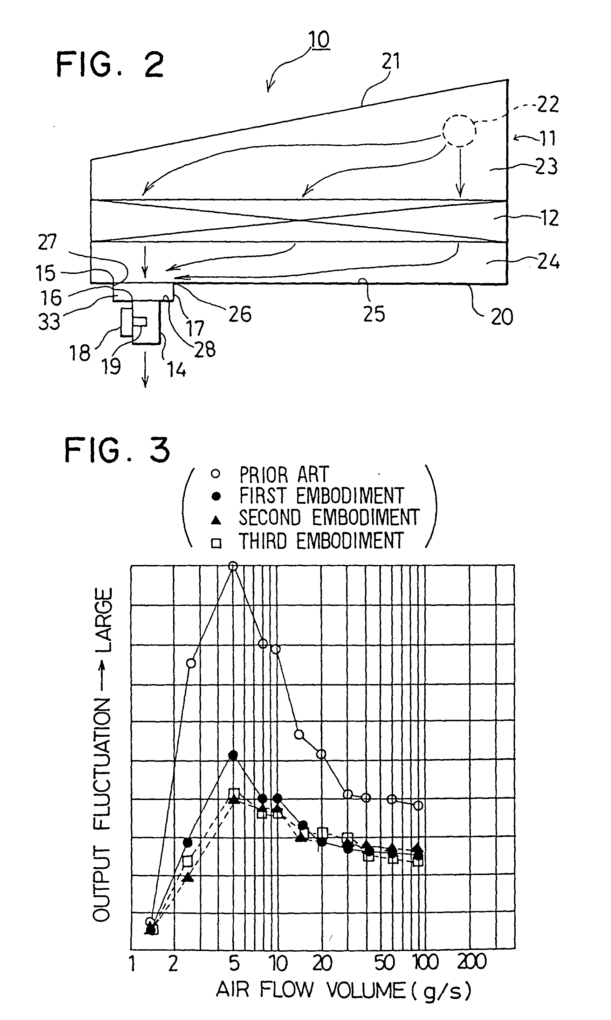

Referring to FIGS. 1 and 2, a first embodiment according to the present invention will be described. Air cleaner 10 is composed of air cleaner case 11, inlet pipe 13, and an outlet pipe having large pipe 17 and small pipe 14. Heat-wire air flow meter 18 having sensor 19 is attached to the outlet pipe. Air cleaner case 11 includes upper case 21 and lower case 20 both connected together. Flat air cleaner element 12 is disposed in air cleaner case 11 at a position between upper case 21 and lower case 20. Inlet pipe 13 is disposed on a side of upper case 21 and connected to inlet opening 22, and the outlet pipe including large pipe 17 and small pipe 14 is disposed underneath bottom surface 25 of lower case 20 at a position eccentric from the center of bottom surface 25. The outlet pipe is connected to outlet opening 26 formed on bottom surface 25 of lower case 20.

Outside air introduced into air cleaner case 11 from inlet pipe 13 enters into upper space 23 (dust side), which is a space defined by upper case 21 and air cleaner element 12, filtered and cleaned through air filter element 12, and flows into lower space 24 (clean side), which is a space defined by air cleaner element 12 and lower case 20. Then, the filtered air flows out through the outlet pipe and sucked into an internal combustion engine. Volume of air flow is measured by air flow meter 18 having sensor 19 attached to a side of small pipe 14.

Large pipe 17 is composed of cylindrical portion 27 and flat portion 28, and cylindrical portion 27 is connected to outlet opening 26 formed on bottom surface 25 of lower case 20. Small pipe 14 is coaxially connected to large pipe 17 on its flat portion 28. Sensor 19 of air flow meter 18 extends to the inner bore of small pipe 14 so that it measures air volume passing through small pipe 14. Air entering into large pipe 17 from lower space 24 is converged into a smaller path (air flow path having a smaller cross-section) at first step 15 which is an annular line formed by joining cylindrical portion 27 of large pipe 17 to outlet opening 26. Air entering into small pipe 14 from large pipe 17 is converged into a further smaller path at second step 16 which is an annular line formed by joining small pipe 14 to an opening formed on flat portion 28 of large pipe 17. Between first step 15 and second step 16, a space 33 is formed.

The air flowing into the outlet pipe from lower space 24 flows along bottom surface 25. This air flow includes turbulence caused by burble (peeling of air flow) and/or vortex. The turbulence in the air flow is alleviated by first step 15, second step 16 and space 33 without using an additional device for straightening air flow. Therefore, air smoothly flows through small pipe 14 where sensor 19 of air flow meter 18 is placed. Since the turbulence in the air flow is alleviated at the position where amount of air flow is measured, fluctuation of the air flow meter outputs becomes small. This effect has been proved by testing the air cleaner having the structure of the first embodiment in comparison with a conventional air cleaner. The graph of FIG. 3 shows the test results. The fluctuation of air flow meter outputs is shown on the ordinate and air flow volume in grams/second on the abscissa. As seen from the graph in FIG. 3, the fluctuation of the outputs of the air flow meter in the first embodiment is much improved, compared with that of the conventional air flow meter, throughout an entire range of air flow volume.

Although it is unavoidable that some turbulence is generated in the air flow in an air cleaner having this kind of structure, the amount of turbulence in the outlet pipe is greatly decreased by the simple structure according to the present invention without using an additional device for improving the air flow which in turn increases air flow resistance. Accordingly, air volume can be measured precisely without adversely affecting the engine output.

In the first embodiment, first step 15 and second step 16 are made coaxially to each other and formed uniformly throughout their entire circle. The steps 15 and 16 may be modified so that they are formed only toward the center of bottom surface 25. The steps made rectangularly in the first embodiment may be rounded or chamfered. Air cleaner case 11 may be made of either resin, a metal plate or a metal-resin compound material.

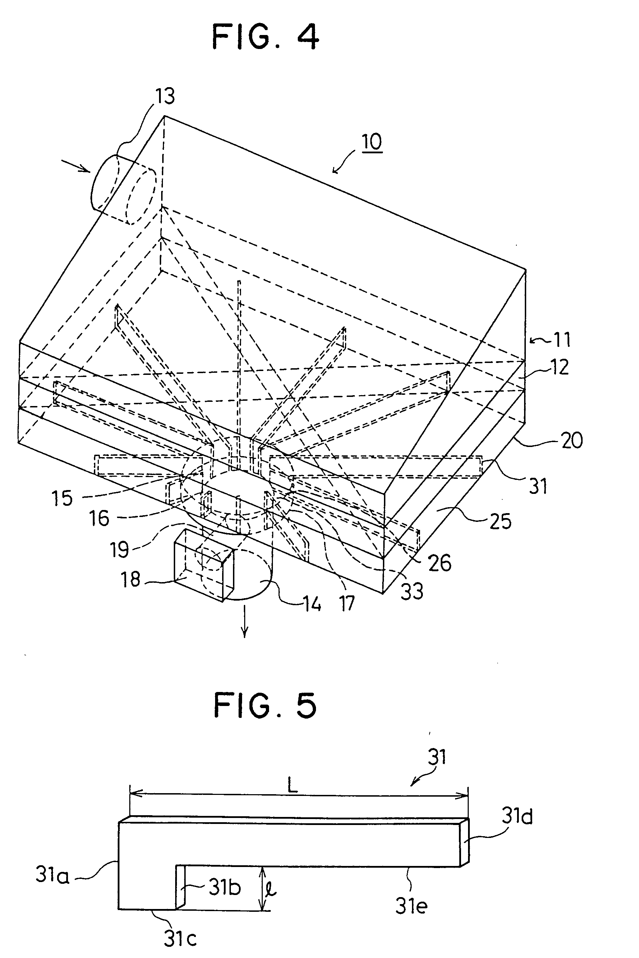

Referring to FIGS. 4 and 5, a second embodiment will be described. In this embodiment, a plurality of ribs 31 are added to the first embodiment, and other structures are the same as those of the first embodiment. Therefore, the same parts or elements are numbered with the same numbers. Ribs 31 each having an L-shape as shown in FIG. 5 are disposed in lower space 24, so that they extend radially from outlet opening 26. Bottom side 31e of the rib contacts bottom surface 25, and an end 31d of the rib contacts the inner wall of lower case 20. Each rib 31 has a respectively different length L so that end 31d contacts the inner wall of lower case 20. The other end 31a of the rib is disposed so that it matches with the diameter of outlet opening 26. Side 31b of the rib contacts cylindrical portion 27 of large pipe 17. Length 1 of side 31b is the same as the depth of large pipe 17 so that side 31c of the rib contacts flat portion 28 of large pipe 17.

Ribs 31 are disposed so that the air flow in lower case 20 converges directly to outlet opening 26 with less turbulence. Because of ribs 31 the air flow in small pipe 14 is further straightened, compared with the first embodiment, and accordingly the fluctuation of air flow meter outputs is further improved as shown in FIG. 3. The improvement is mostly seen in a range of lower air flow volume. The shape of the ribs and the way of their arrangement are not limited to those described above, but may be modified as long as they attain the object of straightening the air flow. Ribs may be made of resin or any other suitable materials.

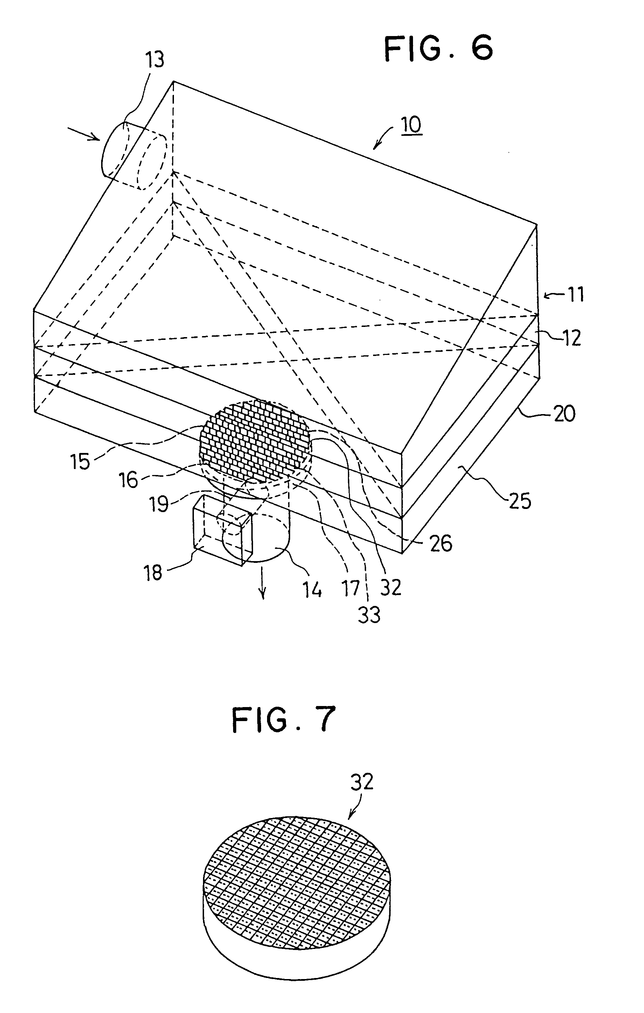

Referring to FIGS. 6 and 7, a third embodiment according to the present invention will be described. In the third embodiment, honeycomb member 32 for further straightening the air flow in the outlet pipe is added to the first embodiment. Other parts having the same number as in the first embodiment are the same as those therein. Honeycomb member 32 made of resin has a shape as shown in FIG. 7, and the thickness thereof is shorter than the depth of large pipe 17. Honeycomb device 32 is disposed in the inner bore of large pipe 17 as shown in FIG. 6 and connected to the inner bore by press-fitting or a heat adhesion at the periphery of honeycomb member 32.

The air flow coming into large pipe 17 is further straightened by honeycomb member 32, and accordingly air flow turbulence in small pipe 14 where sensor 19 of air flow meter 18 is located becomes further smaller. The fluctuation of air flow meter outputs is measured and shown in FIG. 3. As seen in the graph, the fluctuation is further smaller than that of the first embodiment. Its improvement is mostly seen in a range of lower air flow volume. Honeycomb member 32 may be replaced with other structures such as a grid or lattice structure as long as they perform the function of straightening the air flow.

While the present invention has been shown and described with reference to the foregoing preferred embodiments, it will be apparent to those skilled in the art that changes in form and detail may be made therein without departing from the scope of the invention as defined in the appended claims.

Outside air is introduced into an air cleaner (10) and supplied to an internal combustion engine after being cleaned through an air cleaner element (12) disposed in the air cleaner. An air flow meter (18) for measuring air volume supplied to the engine is disposed at the downstream of the air flow. In the air flow path, a first step (15) for converging the air flow, a second step (16) for further converging the air flow and a space (33) between the first and second steps are provided. Turbulence included in the air flow is alleviated in its path, and the air flows out smoothly through the position where the air flow meter is mounted. Accordingly, the air flow meter can measure air volume precisely with less fluctuation.

## Claims

1. An air cleaner for an internal combustion engine comprising:
an air cleaner case (11) having an inlet pipe (13) and an outlet pipe (14, 17) connected to a bottom plate (25) of the air cleaner case;
an air cleaner element (12) disposed in the air cleaner case, outside air introduced into the air cleaner case from the inlet pipe being cleaned through the air filter element and flowing out through the outlet pipe;
a first step (15), formed at a junction of the bottom plate and the outlet pipe, for converging air flow entering into the outlet pipe from the air cleaner case;
a second step (16), disposed in the outlet pipe, for further converging air flow in the outlet pipe; and
a portion for mounting an air flow meter (18), disposed on the outlet pipe at a downstream of the second step.

2. An air cleaner for an internal combustion engine as in claim 1, wherein the outlet pipe (14, 17) is connected to the bottom plate (25) at a position eccentric from a center of the bottom plate.

3. An air cleaner for an internal combustion engine as in claim 1 or 2, wherein:
the outlet pipe comprises a large pipe (17) connected to the bottom plate (25) and a small pipe (14), having a diameter smaller than that of the large pipe, connected to the large pipe so that air flows from the large pipe to the small pipe; and
the second step (16) for further converging air flow is formed at a junction of the large pipe (17) and the small pipe (14).

4. An air cleaner for an internal combustion engine as in claim 3, wherein the large pipe (17) and the small pipe (14) are coaxially connected to each other.

5. An air cleaner for an internal combustion engine as is claim 1, 2, 3 or 4, wherein a plurality of ribs (31) are disposed on the bottom plate (25) in the air cleaner case, so that each rib extends radially from the outlet pipe.

6. An air cleaner for an internal combustion engine as in claim 1, 2, 3, or 4, wherein a member (32) for straightening air flow is disposed in the outlet pipe.

7. An air cleaner for an internal combustion engine as in either one of claims 1 to 6, the air cleaner further comprising an air flow meter (18) mounted on the mounting portion.

## Patentansprüche

1. Luftreiniger für eine Brennkraftmaschine mit:
einer Luftreinigerummantelung (11) mit einer Einlassleitung (13) und einer Auslassleitung (14, 17), die mit einer unteren Platte (25) der Luftreinigerummantelung verbunden ist;
einem Luftreinigerelement (12), das in der Luftreinigerummantelung angeordnet ist, wobei Außenluft in die Luftreinigerummantelung eingeführt wird von der Einlassleitung, die durch das Luftfilterelement gereinigt wird und aus der Auslassleitung ausströmt;
einer ersten Stufe (15), die bei einer Verbindung der unteren Platte und der Auslassleitung ausgebildet ist zum Konvergieren der Luftströmung, die in die Auslassleitung von der Luftreinigerummantelung aus eintritt;
einer zweiten Stufe (16), die in der Auslassleitung angeordnet ist zum weiteren Konvergieren der Luftströmung in der Auslassleitung; und
einem Abschnitt zum Montieren eines Luftmengenmessers (18), der an der Auslassleitung bei einer stromabwärtigen Seite der zweiten Stufe angeordnet ist.

2. Luftreiniger für eine Brennkraftmaschine nach Anspruch 1, wobei die Auslassleitung (14, 17) mit der unteren Platte (25) bei einer außermittigen Position gegenüber einer Mitte der unteren Platte verbunden ist.

3. Luftreiniger für eine Brennkraftmaschine nach Anspruch 1 oder 2,
wobei die Auslassleitung eine große Leitung (17) aufweist, die mit der unteren Platte (25) verbunden ist, und eine kleine Leitung (14) mit einem kleineren Durchmesser als dem der großen Leitung, die mit der großen Leitung so verbunden ist, dass Luft von der großen Leitung zu der kleinen Leitung strömt; und
wobei die zweite Stufe (16) zum weiteren Konvergieren der Luftströmung bei einer Verbindung der großen Leitung (17) mit der kleinen Leitung (14) ausgebildet ist.

4. Luftreiniger für eine Brennkraftmaschine nach Anspruch 3, wobei die große Leitung (17) und die kleine Leitung (14) koaxial miteinander verbunden sind.

5. Luftreiniger für eine Brennkraftmaschine nach Anspruch 1, 2, 3 oder 4, wobei eine Vielzahl an Rippen (31) an der unteren Platte (25) in der Luftreinigerummantelung so angeordnet ist, dass jede Rippe sich radial von der Auslassleitung erstreckt.

6. Luftreiniger für eine Brennkraftmaschine nach Anspruch 1, 2, 3 oder 4, wobei ein Element (32) zum Glätten der Luftströmung in der Auslassleitung angeordnet ist.

7. Luftreiniger für eine Brennkraftmaschine nach einem der Ansprüche 1 bis 6, wobei der Luftreiniger des weiteren einen Luftmengenmesser (18) aufweist, der an dem Montageabschnitt montiert ist.

## Revendications

1. Epurateur d'air pour un moteur à combustion interne comprenant :
un boîtier d'épurateur d'air (11) possédant une canalisation d'entrée (13) et une canalisation de sortie (14,17) connectées à une plaque de base (25) du boîtier d'épurateur d'air;
un élément d'épuration d'air (12) disposé dans le boîtier de l'épurateur d'air, de l'air extérieur introduit dans le boîtier de l'épurateur d'air à partir de la canalisation d'entrée étant purifié par l'élément formant filtre à air et sortant par la canalisation de sortie;
un premier épaulement (15) formé au niveau de la jonction entre la plaque de base et la canalisation de sortie, pour convertir un écoulement d'air pénétrant dans la canalisation de sortie en provenance du boîtier de l'épurateur d'air;
un second épaulement (16) disposé dans la canalisation de sortie et servant à faire converger d'une manière supplémentaire le courant d'air dans la canalisation de sortie; et
une partie pour le montage d'un débitmètre d'air (18), disposée sur la canalisation de sortie sur le côté aval du second épaulement.

2. Epurateur d'air pour un moteur à combustion interne selon la revendication 1, dans lequel la canalisation de sortie (14,17) est raccordée à la plaque de base (25) dans une position excentrée par rapport au centre de la plaque de base.

3. Epurateur d'air pour un moteur à combustion interne selon la revendication 1 ou 2, dans lequel :
la canalisation de sortie comprend une canalisation de grande taille (17) raccordée à la plaque de base (25) et une canalisation de petite taille (14) possédant un diamètre extérieur inférieur à celui de la canalisation de grande taille, et raccordée à la canalisation de grande taille de sorte que l'air circule depuis la canalisation de grande taille vers la canalisation de petite taille; et
le second épaulement (16) servant à faire en outre converger le courant d'air est formé au niveau d'une jonction entre la canalisation de grande taille (17) et la canalisation de petite taille (14).

4. Epurateur d'air pour un moteur à combustion interne selon la revendication 3, dans lequel la canalisation de grande taille (17) et la canalisation de petite taille (14) sont raccordées coaxialement l'une à l'autre.

5. Epurateur d'air pour un moteur à combustion interne selon la revendication 1, 2, 3 ou 4, dans lequel une pluralité de nervures (31) sont disposées sur la plaque de base (25) dans le boîtier de l'épurateur d'air, de sorte que chaque nervure s'étend radialement à partir de la canalisation de sortie.

6. Epurateur d'air pour un moteur à combustion interne selon la revendication 1, 2, 3 ou 4, dans lequel un élément (32) pour redresser le courant d'air est disposé dans la canalisation de sortie.

7. Epurateur d'air pour un moteur à combustion interne selon l'une quelconque des revendications 1 à 6, l'épurateur d'air comprenant en outre un débitmètre d'air (18) monté sur la partie de montage.
